# EUROPÄISCHE PATENTSCHRIFT

(11) **EP 0 862 940 B1**
(45) Veröffentlichungstag und Bekanntmachung des Hinweises auf die Patenterteilung: **09.10.2002**
(21) Anmeldenummer: 98102991.1
(22) Anmeldetag: 20.02.1998
(51) Int. Cl.: B01D 53/94, F01N 3/20, F01N 9/00

(54) **Mehrstufiges Dreiwegkatalysatorsystem**
Multi-stage three way catalyst system
Système de catalysateur à trois voies à plusieurs étages

(30) Priorität: 07.03.1997 DE 19709279
(43) Veröffentlichungstag der Anmeldung: 09.09.1998
(73) Patentinhaber: Volkswagen Aktiengesellschaft, 38436 Wolfsburg (DE)
(72) Erfinder: Richter, Thomas, Dipl.- Chem., 38448 Wolfsburg (DE)
(74) Vertreter: Schneider, Henry, Dipl.-Ing.

(56) Entgegenhaltungen:
- EP-A- 0 514 591
- EP-A- 0 533 460
- EP-A- 0 605 251
- EP-A- 0 605 991
- DE-A- 4 440 833
- DE-C- 4 406 648
- GB-A- 2 303 565

## Beschreibung

Die Erfindung betrifft ein Verfahren zur Reduktion der Stickoxide im Abgas von Verbrennungskraftmaschinen gemäß dem Oberbegriff des Anspruchs 1.

Es ist bekannt, dass an bestimmten Katalysatoren unverbrannte Kohlenwasserstoffe (HC) in Gegenwart von Sauerstoff Stickoxide (NOₓ) reduzieren können. Da bei dieser Katalyse auch eine Oxidation von HC als Neben- oder Hauptreaktion stattfinden kann, sind solche Katalysatoren nur sehr bedingt für Verbrennungskraftmaschinen geeignet.

Aus der DE 44 40 833 A1 ist eine Katalysatoranordnung zur Reduktion von NOₓ in sauerstoffhaltigen Abgasen bekannt, welche mindestens zwei oxidierende und reduzierende Katalysatoren unterschiedlichen Aufbaus umfasst, die entsprechend den unterschiedlichen Abgastemperaturen an unterschiedlichen Stellen des Abgassystems angeordnet sind. Jedem der Katalysatoren ist eine unabhängig steuerbare Dosiereinrichtung zur Zuführung von Reduktionsmitteln vorgeschaltet. Dabei handelt es sich bevorzugt bei dem ersten (motornahen) Katalysator um einen platinhaltigen Metallkatalysator und bei dem nachgeschalteten (motorfernen) Katalysator um einen zeolithhaltigen Katalysator. Die Auslegung der Arbeitstemperaturbereiche der Katalysatoren wird im Einzelnen nicht näher spezifiziert. Femer ist an der beschriebenen Lösung nachteilig, dass die Zuordnung einer HC-Dosiereinrichtung zu jedem der Katalysatoren sehr kostenintensiv und mit einem hohen Steueraufwand verbunden ist.

Aufgabe der vorliegenden Erfindung ist es, ein Katalysatorsystem zu schaffen, an dem auch bei den unterschiedlichen Betriebsbedingungen einer Brennkraftmaschine eine HC/NOₓ-Umsetzung in Gegenwart von Sauerstoff stattfindet.

Diese Aufgabe wird gelöst mit einem Verfahren mit den Maßnahmen des Anspruchs 1.

Die Unteransprüche zeigen besonders bevorzugte Ausführungsformen, mit denen eine hohe Umsetzung über einen weiten Temperaturbereich erreicht wird.

Die Erfindung zur Verminderung der Stickoxidkonzentration im sauerstoffhaltigen Abgas von verbrauchsoptimierten Motoren, insbesondere Dieselmotoren, insbesondere mit einem HC₁/NOₓ-Verhältnis ≥ 1 im Rohabgas, beinhaltet im Wesentlichen die Kombination eines motornah angeordneten platinhaltigen Oxidationskatalysators (erster Katalysator), eine HC-Dosierstelle und eine Hochtemperatur/Tieftemperatur-Katalysatorkombination (Zwischenkatalysator und zweiter Katalysator).

Als Oxidationskatalysator sind grundsätzlich alle platinhaltigen Trägerkatalysatoren geeignet, ungeachtet dessen, welche weiteren katalytisch aktiven Komponenten zusätzlich enthalten sind und auf welchen Trägern sie sich befinden, zum Beispiel
- Pt auf Al₂O₃, SiO₂, Zeolithen, Perowskiten, Pyrochloren
- ionenausgetauschtes Platin in jeglicher Zeolithstruktur
- Platin mit oder ohne Washcoat auf metallischen Oberflächen
- Platin in Gegenwart von z. B. Palladium und/oder Rhodium (Dreiwegekatalysator).

Die Platinbeladung sollte mindestens 1,41 g/dm³ (≥ 40 g/ft³) betragen.

Für den Gesamtwirkungsmechanismus ist es vorteilhaft, dass dieser erste Katalysator so eingebaut ist, dass seine Temperatur auch im Leerlauf der Maschine möglichst nicht unter 200 °C fällt. Unter diesen Bedingungen wird ein größtmöglicher NOₓ-Umsatz bereits ohne Reduktionsmittelzudosierung erreicht. Außerdem wird bereits bei niedrigen Temperaturen in der sauerstoffhaltigen Atmosphäre neben der Oxidation von Kohlenwasserstoffen und Kohlenmonoxid auch das Konzentrationsverhältnis von NO/NO₂ im NOₓ zugunsten des NO₂ verschoben. Es werden also, abhängig von der Katalysatortemperatur, deutliche Mengen an NO₂ gebildet.

Da der Oxidationskatalysator unter den genannten Bedingungen das vorhandene HC nahezu vollständig oxidiert, wird stromabwärts eine Dosierstelle vorgesehen, an der Kohlenwasserstoffe wieder bedarfsgerecht dem Abgas zudosiert werden können.

Weiter stromabwärts wird ein Hochtemperaturkatalysator (kupfer- oder silber-/galliumhaltig) als Zwischenkatalysator installiert, der bei Temperaturen oberhalb 300 °C eine Reduktion der verbliebenen Stickoxide mit den neu zudosierten Kohlenwasserstoffen ermöglicht.

Dem Hochtemperaturkatalysator wird ein zweiter Oxidationskatalysator (Aufbau wie oben beschrieben) nachgeordnet, der im Temperaturübergangsbereich zwischen optimaler Wirksamkeit des ersten Oxidationskatalysators und dem Anspringen des Hochtemperaturkatalysators die NOₓ-Reduktion mit den auf dem Hochtemperaturkatalysator noch nicht verbrannten zudosierten Kohlenwasserstoffen durchführt.

Diese Anordnung von Katalysatoren bewirkt durch den (möglichst optimalen) Einbau des jeweiligen Kats in "sein" Temperaturfenster bei den motorgenerierten beziehungsweise durch die Zusatzeinspritzung eingestellten HC₁/NOₓ-Verhältnissen nach Optimierung des Gesamtsystems im relevanten Temperaturbereich von instationären Brennkraftmaschinen eine deutliche NOₓ-Verminderung.

## Patentansprüche

1. Verfahren zum Reinigen eines Abgases einer Verbrennungskraftmaschine, bei dem HC (Kohlenwasserstoffe) mit NOₓ (Stickoxiden) in Gegenwart von O₂ an einem Katalysator umgesetzt werden, wobei das Abgas zuerst über einen ersten, für die HC-NOₓ-Umsetzung geeigneten Katalysator geführt wird, danach an einer HC-Zudosierung vorbeigeführt wird, um anschließend über einen zweiten Katalysator zu strömen, der ebenfalls geeignet ist für die HC-NOₓ-Umsetzung, **dadurch gekennzeichnet, dass** das Abgas über einen Zwischenkatalysator geführt wird, der stromabwärts der HC-Zudosierung und stromaufwärts des zweiten Katalysators angeordnet ist und der ebenfalls geeignet ist für die HC-NOₓ-Umsetzung und diese Umsetzung bei einer höheren Abgastemperatur katalysiert als der zweite Katalysator.

2. Verfahren nach Anspruch 1, **dadurch gekennzeichnet, dass** über die HC-Zudosierung HC zudosiert wird, wenn der zweite Katalysator und/oder der Zwischenkatalysator sich in einem Temperaturbereich befindet, in dem er die HC-NOₓ-Umsetzung katalysiert.

3. Verfahren nach Anspruch 1 oder 2, **dadurch gekennzeichnet, dass** der zweite Katalysator so weit nach dem ersten Katalysator angeordnet ist, dass er von dem durchströmenden Abgas in einen Temperaturbereich gebracht wird, in dem er die HC-NOₓ-Umsetzung katalysiert, wenn der erste Katalysator von dem durchströmenden Abgas in einen Hochtemperaturbereich gebracht wird, in dem er die HC-NOₓ-Umsetzung nur gering, insbesondere zu max. 50 % seines minimalen Umsatzes, oder gar nicht katalysiert.

4. Verfahren nach einem der vorhergehenden Ansprüche, **dadurch gekennzeichnet, dass** der erste und/oder der zweite Katalysator ein platinhaltiger Katalysator ist.

5. Verfahren nach Anspruch 4, **dadurch gekennzeichnet, dass** der erste und/oder der zweite Katalysator eine Platinbeladung von mindestens 1,41 g/dm³ (≥ 40g/ft³) aufweist.

6. Verfahren nach einem der vorhergehenden Ansprüche, **dadurch gekennzeichnet, dass** der Zwischenkatalysator ein Hochtemperaturkatalysator ist, der bei einer Temperatur oberhalb 300 °C die HC-NOₓ-Umsetzung katalysiert.

7. Verfahren nach einem der vorhergehenden Ansprüche, **dadurch gekennzeichnet, dass** als Zwischenkatalysator ein Kupferkatalysator oder ein Silber/Gallium-Katalysator eingesetzt wird.

8. Verfahren nach einem der vorhergehenden Ansprüche, **dadurch gekennzeichnet, dass** das Abgas über einen Vorkatalysator geführt wird, der stromaufwärts des ersten Katalysators angeordnet ist und der ebenfalls geeignet ist für die HC-NOₓ-Umsetzung und diese Umsetzung bei einer höheren Abgastemperatur katalysiert als der erste Katalysator.

9. Verfahren nach Anspruch 8, **dadurch gekennzeichnet, dass** der Vorkatalysator ein Hochtemperaturkatalysator ist, der bei einer Temperatur oberhalb 300 °C die HC-NOₓ-Umsetzung katalysiert.

10. Verfahren nach Anspruch 8 oder 9, **dadurch gekennzeichnet, dass** als Vorkatalysator ein Kupferkatalysator oder ein Silber/Gallium-Katalysator eingesetzt wird.

11. Verfahren nach einem der vorhergehenden Ansprüche, **dadurch gekennzeichnet, dass** dem ersten Katalysator bzw. dem Vorkatalysator ein Rohabgas mit einem HC₁/NOₓ-Verhältnis ≥ 1 zugeführt wird.

12. Verfahren nach einem der vorhergehenden Ansprüche, **dadurch gekennzeichnet, dass** dem Zwischenkatalysator durch HC-Zudosierung ein Abgas mit einem HC₁/NOₓ-Verhältnis ≥ 1 zugeführt wird.

13. Verfahren nach einem der vorhergehenden Ansprüche, **dadurch gekennzeichnet, dass** der erste Katalysator und/oder der zweite Katalysator die HC-NOₓ-Umsetzung bei einer Temperatur zwischen 200 und 300 °C katalysiert.

14. Verfahren nach einem der vorhergehenden Ansprüche, **dadurch gekennzeichnet, dass** der zweite Katalysator die HC-NOₓ-Umsetzung bei höheren Temperaturen als der erste Katalysator katalysiert.

15. Verfahren nach einem der vorhergehenden Ansprüche, **dadurch gekennzeichnet, dass** ab einer Abgastemperatur von etwa 200 °C aufwärts im Wesentlichen immer an einem der Katalysatoren die HC-NOₓ-Umsetzung stattfindet.

16. Verfahren nach einem der vorhergehenden Ansprüche, **dadurch gekennzeichnet, dass** das Abgas mindestens 1 %, insbesondere mindestens 2 % O₂ enthält.

17. Verfahren nach einem der vorhergehenden Ansprüche, **dadurch gekennzeichnet, dass** bei der katalytischen HC-NOₓ-Umsetzung mindestens 10%, insbesondere mindestens 20 % des in den Katalysator strömenden NOₓ umgesetzt werden.

## Claims

1. Process for cleaning an exhaust gas from a combustion engine, in which HC (hydrocarbons) are converted with NOₓ (nitrogen oxides) in the presence of O₂ over a catalyst, wherein the exhaust gas is initially passed over a first catalyst appropriate for the HC-NOₓ conversion, after which it receives an additional metered charge of HC, and then flows over a second catalyst, which is also appropriate for the HC-NOₓ conversion, **characterised in that** the exhaust gas is passed over an intermediate catalyst, which is arranged downstream of the additional metered charge of HC and upstream of the second catalyst, and which is similarly appropriate for the HC-NOₓ conversion and catalyses this conversion at a higher exhaust gas temperature than the second catalyst.

2. Process according to claim 1, **characterised in that** HC is added in the additional metered charge of HC whenever the second catalyst and/or the intermediate catalyst is in a temperature range in which it catalyses the HC-NOₓ conversion.

3. Process according to claim 1 or 2, **characterised in that** the second catalyst is arranged at such a distance after the first catalyst that the exhaust gas passing through it brings the second catalyst into a temperature range in which it catalyses the HC-NOₓ conversion whenever the exhaust gas passing through the first catalyst brings it into a high temperature range in which the first catalyst catalyses the HC-NOₓ conversion only slightly, especially up to a maximum of 50% of its minimum conversion, or does not catalyse at all.

4. Process according to any one of the preceding claims, **characterised in that** the first and/or the second catalyst is a platinum-containing catalyst.

5. Process according to claim 4, **characterised in that** the first and/or the second catalyst provides a platinum charge of at least 1.41 g/dm³ (≥ 40 g/ft³).

6. Process according to any one of the preceding claims, **characterised in that** the intermediate catalyst is a high-temperature catalyst, which catalyses the HC-NOₓ conversion at a temperature above 300°C.

7. Process according to any one of the preceding claims, **characterised in that** a copper catalyst or a silver/gallium catalyst is used as the intermediate catalyst.

8. Process according to any one of the preceding claims, **characterised in that** the exhaust gas is passed over a preliminary catalyst, which is arranged upstream of the first catalyst and which is also appropriate for the HC-NOₓ conversion and catalyses this conversion at a higher exhaust-gas temperature than the first catalyst.

9. Process according to claim 8, **characterised in that** the preliminary catalyst is a high-temperature catalyst, which catalyses the HC-NOₓ conversion at a temperature above 300°C.

10. Process according to claim 8 or 9, **characterised in that** a copper catalyst or a silver/gallium catalyst is used as the preliminary catalyst.

11. Process according to any one the preceding claims, **characterised in that** an untreated exhaust gas with an HC₁/NOₓ ratio ≥ 1 is supplied to the first catalyst and/or the preliminary catalyst.

12. Process according to any one of the preceding claims, **characterised in that** an exhaust gas with a HC₁/NOₓ ratio ≥ 1 is supplied to the intermediate catalyst by means of an additional metered charge of HC.

13. Process according to any one of the preceding claims, **characterised in that** the first catalyst and/or the second catalyst catalyses the HC-NOₓ conversion at a temperature between 200 and 300°C.

14. Process according to any one of the preceding claims, **characterised in that** the second catalyst catalyses the HC-NOₓ conversion at higher temperatures than the first catalyst.

15. Process according to any one of the preceding claims, **characterised in that** from an exhaust gas temperature of approximately 200°C and upwards, the HC-NOₓ conversion essentially always takes place over one of the catalysts.

16. Process according to any one of the preceding claims, **characterised in that** the exhaust gas contains at least 1%, in particular, at least 2% O₂.

17. Process according to any one of the preceding claims, **characterised in that** at least 10%, in particular at least 20%, of the NOₓ flowing into the catalyst is converted during the catalytic HC-NOₓ conversion.

## Revendications

1. Procédé de purification d'un gaz d'échappement d'un moteur à combustion interne, dans lequel des hydrocarbures (HC) contenant des oxydes d'azote (NOₓ) sont convertis en présence d'O₂ au niveau d'un catalyseur, dans lequel le gaz d'échappement est d'abord amené sur un premier catalyseur approprié pour la conversion HC-NOₓ, puis passe devant un dispositif d'addition dosée de HC, pour enfin s'écouler par un second catalyseur qui est également approprié pour la conversion HC-NOₓ, **caractérisé en ce que** le gaz d'échappement est amené sur un catalyseur intermédiaire qui est disposé en aval du dispositif d'addition dosée de HC et en amont du second catalyseur et qui est également approprié pour la conversion HC-NOₓ, et qui catalyse cette conversion à une température d'échappement supérieure à celle du second catalyseur.

2. Procédé selon la revendication 1, **caractérisé en ce que** l'on dose HC par le dispositif d'addition dosée de HC lorsque le second catalyseur et/ou le catalyseur intermédiaire se trouve(nt) dans une plage de températures dans laquelle il catalyse la conversion HC-NOₓ.

3. Procédé selon la revendication 1 ou 2, **caractérisé en ce que** le second catalyseur est disposé après le premier catalyseur à une distance telle qu'il est amené, par le gaz d'échappement qui s'écoule, dans une plage de températures dans laquelle il catalyse la conversion HC-NOₓ lorsque le premier catalyseur est amené, par le gaz d'échappement qui s'écoule, dans une plage de hautes températures dans laquelle il ne catalyse la conversion HC-NOₓ que faiblement, en particulier à 50 % maximum de sa conversion minimale, ou qu'il ne la catalyse pas du tout.

4. Procédé selon l'une des revendications précédentes, **caractérisé en ce que** le premier et/ou le second catalyseur est (sont) un catalyseur contenant du platine.

5. Procédé selon la revendication 4, **caractérisé en ce que** le premier et/ou le second catalyseur présente(nt) une charge de platine au moins égale à 1,41 g/dm³ (≥ 40 g/pied³).

6. Procédé selon l'une des revendications précédentes, **caractérisé en ce que** le catalyseur intermédiaire est un catalyseur haute température qui catalyse la conversion HC-NOₓ à une température supérieure à 300 °C.

7. Procédé selon l'une des revendications précédentes, **caractérisé en ce que** l'on utilise en tant que catalyseur intermédiaire un catalyseur au cuivre ou un catalyseur à l'argent/gallium.

8. Procédé selon l'une des revendications précédentes, **caractérisé en ce que** le gaz d'échappement est amené sur un pré-catalyseur qui est disposé en amont du premier catalyseur et qui est également approprié pour la conversion HC-NOₓ, et qui catalyse cette conversion à une température d'échappement supérieure à celle du premier catalyseur.

9. Procédé selon la revendication 8, **caractérisé en ce que** le pré-catalyseur est un catalyseur haute température qui catalyse la conversion HC-NOₓ à une température supérieure à 300 °C.

10. Procédé selon la revendication 8 ou 9, **caractérisé en ce que** l'on utilise en tant que pré-catalyseur un catalyseur au cuivre ou un catalyseur à l'argent/gallium.

11. Procédé selon l'une des revendications précédentes, **caractérisé en ce qu'**un gaz d'échappement brut présentant un rapport HC₁/NOₓ ≥ 1 est amené au premier catalyseur ou au pré-catalyseur.

12. Procédé selon l'une des revendications précédentes, **caractérisé en ce qu'**un gaz d'échappement présentant un rapport HC₁/NOₓ ≥ 1 est amené au catalyseur intermédiaire par le biais du dispositif d'addition dosée de HC.

13. Procédé selon l'une des revendications précédentes, **caractérisé en ce que** le premier catalyseur et/ou le second catalyseur catalyse(nt) la conversion HC-NOₓ à une température comprise entre 200 et 300 °C.

14. Procédé selon l'une des revendications précédentes, **caractérisé en ce que** le second catalyseur catalyse la conversion HC-NOₓ à des températures supérieures à celles du premier catalyseur.

15. Procédé selon l'une des revendications précédentes, **caractérisé en ce qu'**à partir d'une température de gaz d'échappement environ égale à 200 °C, la conversion HC-NOₓ se fait essentiellement toujours au niveau d'un des catalyseurs.

16. Procédé selon l'une des revendications précédentes, **caractérisé en ce que** le gaz d'échappement contient au moins 1 %, en particulier au moins 2 % d'O₂.

17. Procédé selon l'une des revendications précédentes, **caractérisé en ce que**, lors de la conversion catalytique HC-NOₓ, au moins 10 %, en particulier au moins 20 % du NOₓ entrant dans le catalyseur sont convertis.
